# EUROPÄISCHE PATENTSCHRIFT

(11) **EP 2 615 292 B1**
(45) Veröffentlichungstag und Bekanntmachung des Hinweises auf die Patenterteilung: **27.08.2014**
(21) Anmeldenummer: 12151100.0
(22) Anmeldetag: 13.01.2012
(51) Int. Cl.: F02M 37/22, H01R 43/24, B01D 46/00

(54) **Kraftstoff-Filter mit integrierten Sensoren**
Fuel filter having integrated sensors
Filtre à carburant doté de capteurs intégrés

(43) Veröffentlichungstag der Anmeldung: 17.07.2013
(73) Patentinhaber: MAHLE International GmbH, 70376 Stuttgart (DE)
(72) Erfinder: Jensen, Hans, 73265 Dettingen (DE); Johnson, Darren, Romulus, MI Michigan 48174 (US); Mulkeran, Kevin, Holly, MI Michigan 48422 (US); Xia, Zhouxuan, Windsor, Ontario N9G 2R5 (CA)
(74) Vertreter: BRP Renaud & Partner

(56) Entgegenhaltungen:
- DE-A1- 3 701 259
- DE-A1- 19 524 417
- DE-A1-102005 039 086
- DE-A1-102006 034 077
- DE-B3-102006 028 815
- US-A1- 2004 065 144
- US-A1- 2012 103 880

## Beschreibung

### ALLGEMEINER STAND DER TECHNIK

### 1. Gebiet der Erfindung

Die vorliegende Erfindung ist auf einen Kraftstoff-Filter und insbesondere auf einen Kraftstoff-Filter mit integrierten Sensoren gerichtet.

### 2. Beschreibung des Standes der Technik

Kraftstoff-Filter sind gut bekannte Einrichtungen, die dazu verwendet werden, Unreinheiten aus Kraftstoff zu entfernen, der danach zu einer Verbrennungskraftmaschine geleitet wird. Kraftstoff-Filter des auf dem entsprechenden Gebiet üblicherweise bekannten Typs schließen ein Gehäuse sowie ein in dem Gehäuse getragenes Filterelement ein. Kraftstoff wird durch das Filterelement als ein Mittel zum Entfernen der oben erwähnten Unreinheiten geführt. Zusätzlich ist bekannt, dass einige Kraftstoff-Filter Sensoren einschließen, die verschiedene Eigenschaften des Kraftstoffs erfassen. In diesem Fall ist das Kraftstoff-Filtergehäuse mit gesonderten Öffnungen geformt, durch welche die einzelnen Sensoren Zugang zu dem Kraftstoff erlangen. Im Einzelnen sind die Sensoren typischerweise in diesen zu diesem Zweck in dem Gehäuse geformten gesonderten Öffnungen angebracht. Jeder Sensor muss ebenfalls eingebaut und in Bezug auf das Gehäuse abgedichtet sein, typischerweise unter Verwendung von mit Gewinde versehenen Messingeinsätzen, O-Ringen und möglicherweise anderen Befestigungseinrichtungen. Diese zusätzlichen Bauteile und Montagezeit steigern die Kosten der Fertigung des Kraftstoff-Filters.

Aus der US 2004/065144 A1 ist eine gattungsgemäße Kraftstoff-Filterbaugruppe für eine Verbrennungskraftmaschine bekannt. Die Kraftstoff-Filterbaugruppe umfasst ein Gehäuse, das ein Filtergehäuse eines Filters sowie ein Aufsatzgehäuse eines Aufsatzes aufweist. Ein Filterelement ist in einer vom Filtergehäuse definierten Filterkammer getragen, wobei durch die Filterkammer Kraftstoff geführt wird. Ferner ist eine Pumpe vorgesehen, die den Kraftstoff von außerhalb der Kraftstofffiltergruppe ansaugt und durch einen im vom Aufsatz ausgebildeten Hohlraum angeordneten Verbindungsabschnitt in die Filterkammer des Filtergehäuses pumpt. Hierzu ist ein Pumpenauslass der Pumpe mit dem Verbindungsabschnitt verbunden. Hierdurch gelangt der durch das Filterelement bzw. das Filtergehäuse strömende Kraftstoff nicht in den vom Aufsatz gebildeten Hohlraum. Die bekannte Kraftstofffiltergruppe umfasst des Weiteren mehrere Sensoren, die sämtlich auf einer vom Filtergehäuse abgewandten Seite des Aufsatzes angeordnet sind.

In der DE 10 2005 039 086 A1 ist ein Verfahren zur Herstellung einer elektrischen Verbindungseinrichtung beschrieben.

Aus der DE 195 24 417 A1 ist ein Kraftstofffilter mit einem Kunststoffgehäuse bekannt. Der Kraftstofffilter umfasst einen oberen Teil und einen unteren Teil, wobei ein Filterelement im oberen Teil gehalten ist. In dem vom oberen Teil getrennten unteren Teil werden vielmehr abgesunkene flüssige Verunreinigungen des Kraftstoffes gesammelt. In einer Wandung des unteren Teils sind dabei Sensoren angeordnet, um ein Niveau der in das untere Teil abgesunkenen flüssigen Verunreinigungen zu bestimmen.

Aus der DE 37 01 259 A1 ist eine Einrichtung zur Entfernung von Wasser aus dem Kraftstoffleitungssystem einer Brennkraftmaschine mit einem Kraftstofffilter bekannt. Der Kraftstofffilter umfasst hierbei einen Wassersammelraum, in dem sich aus dem Kraftstoff-Leitungssystem abgeschiedenes Wasser sammelt.

Es besteht eine anhaltende Bemühung, Wege zu suchen, um die Kosten eines gegebenen mit der Verbrennungskraftmaschine verknüpften Bauteils zu verringern. Doch sind bisher die gesondert angebrachten und eingebauten Sensoren allgemein als der Stand der Kraftstoff-Filtertechnik akzeptiert worden, ungeachtet der mit dieser Technologie verknüpften Kosten von Fertigung und Montage.

### KURZDARSTELLUNG DER ERFINDUNG

Die vorliegende Erfindung überwindet die Mängel beim Stand der Technik in einer Kraftstoff-Filterbaugruppe für eine Verbrennungskraftmaschine, die ein geformtes Kunststoffgehäuse einschließt, das eine innere Filterkammer definiert. Ein Filterelement wird wirksam in der Filterkammer getragen. Kraftstoff wird durch die Filterkammer geführt, um Unreinheiten zu entfernen. Wenigstens ein Sensor wird wirksam durch das Gehäuse getragen, um wenigstens eine Eigenschaft des Kraftstoffs, der durch den Kraftstoff-Filter hindurchgeht, zu erfassen. Der Sensor schließt ein Element ein, das dem Kraftstoff ausgesetzt ist. Ein gemeinsamer Verbinderanschluss ist dafür eingerichtet, eine elektrische Verbindung mit einer Energiequelle bereitzustellen. Leitungen erstrecken sich zwischen dem Element und dem gemeinsamen Verbinderanschluss. Die Leitungen sind im Wesentlichen zwischen dem Element und dem gemeinsamen Verbinderanschluss in Kunststoff eingekapselt derart, dass die Leitungen gegenüber einer Berührung mit dem Kraftstoff versiegelt sind. Folglich ist die Sensorbaugruppe in das Kraftstoff-Filtergehäuse integriert und während des Vorgangs des Formens des Gehäuses geformt.

Die vorliegende Erfindung ist ebenfalls auf ein Verfahren zur Fertigung eines Kraftstoff-Filters für eine Verbrennungskraftmaschine gerichtet. Das Verfahren schließt den Schritt des Anordnens wenigstens eines Sensors, der ein Element und Leitungen einschließt, in einem Formhohlraum ein. Danach wird geschmolzener Kunststoff in den Formhohlraum eingespritzt, um so ein Filtergehäuse zu definieren, das eine innere Filterkammer hat, durch die Kraftstoff hindurchgehen kann, und so, dass das Element des Sensors dem Kraftstoff ausgesetzt ist, der durch die Kraftstoffkammer hindurchgeht. Zur gleichen Zeit werden die Leitungen in geschmolzenem Kunststoff eingekapselt.

Auf diese Weise werden die zusätzlichen Kosten, die mit den mit Gewinde versehenen Messingeinsätzen, O-Ringen und anderen Befestigungsbauteilen verknüpft sind, ebenso beseitigt wie die Kosten des Montierens der Sensorbaugruppe an dem Gehäuse.

### KURZE BESCHREIBUNG DER ZEICHNUNGEN

Andere Vorzüge der Erfindung werden leicht zu erkennen sein, wenn dieselbe besser verständlich wird unter Bezugnahme auf die folgende ausführliche Beschreibung, wenn sie betrachtet wird in Verbindung mit den beigefügten Zeichnungen, in denen:
Figur 1 eine perspektivische Ansicht einer Ausführungsform der vorliegenden Erfindung ist, die den gemeinsamen Verbinderanschluss zeigt, der an dem Topf des Gehäuses angeordnet ist,
Figur 2 eine perspektivische Ansicht einer anderen Ausführungsform der vorliegenden Erfindung ist, die den gemeinsamen Verbinderanschluss zeigt, der an dem Deckel des Gehäuses angeordnet ist,
Figur 3 eine teilweise seitliche Querschnittsansicht der Filterbaugruppe der vorliegenden Erfindung ist, die den in das Gehäuse der Baugruppe geformten Sensor 28 zeigt,
Figur 4 eine perspektivische Ansicht ist, welche die Leitungen der Sensoren der vorliegenden Erfindung illustriert, wie sie aus Metallrohlingen gestanzt sind,
Figur 4B die Leitungen der Sensoren der vorliegenden Erfindung illustriert, geformt aus Metallrohlingen und mit Kunststoff-Bindungen, die dazu verwendet werden, einen Spalt zwischen benachbarten Leitungen aufrechtzuerhalten, und
Figur 4C eine perspektivische Ansicht der Leitungen der Sensoren der vorliegenden Erfindung, nachdem die Metallverbindungen von denselben abgestreift worden sind, ist.

### DETAILLIERTE BESCHREIBUNG DER ERFINDUNG

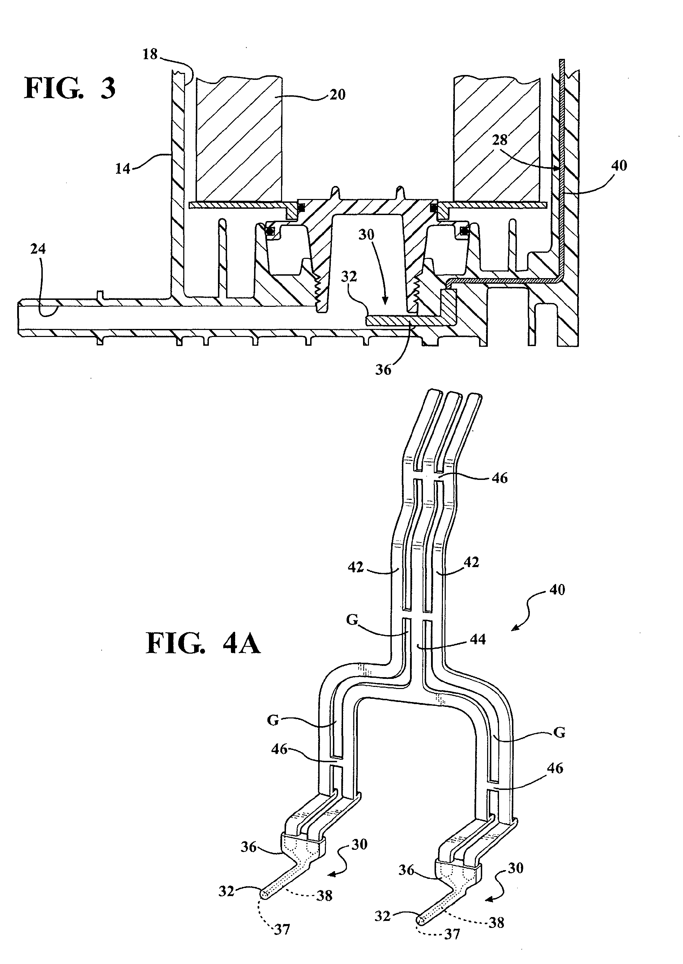

Unter Bezugnahme auf die Zeichnungen, wobei durch die gesamten Zeichnungen gleiche Zahlen verwendet werden, um gleiche Merkmale zu bezeichnen, wird nun eine Kraftstoff-Filterbaugruppe für eine Verbrennungskraftmaschine im Allgemeinen bei 10 angezeigt. Die Kraftstoff-Filterbaugruppe 10 schließt ein geformtes Kunststoff-Gehäuse, das im Allgemeinen bei 12 angezeigt wird, ein. Das Gehäuse 12 schließt einen Topf 14 und einen Deckel 16 ein. Typischerweise kann der Deckel 16 abnehmbar an dem Topf 14 angebracht sein. Im Einzelnen kann der Deckel 16, in einigen Fällen, schraubend an dem Topf 14 des Gehäuses 12 angebracht sein. Zu diesem Zweck können der Deckel 16 und der Topf 14 zusammenwirkende Gewinde sowie eine beliebige geeignete Dichtung einschließen, wie es auf dem Gebiet bekannt ist. Zusammen definieren der Topf 14 und der Deckel 16 eine innere Filterkammer 18, wie sie am besten in Figur 3 gezeigt wird. Ein Filterelement 20 wird wirksam in der Filterkammer 18 getragen, und Kraftstoff wird durch die Filterkammer 18 und das Filterelement 20 als ein Mittel zum Entfernen von Unreinheiten aus dem Kraftstoff geführt. Folglich schließt das Gehäuse 12 einen Einlass 22 ein, der eine Fluidverbindung zwischen einer Kraftstoffquelle und der Kraftstoffkammer 18 bereitstellt. Typischerweise schließt die Kraftstoffquelle einen Kraftstofftank ein. Ein Auslass 24 stellt eine Fluidverbindung zwischen der Filterkammer 18 und der Verbrennungskraftmaschine bereit. Eine Rückführungsöffnung 26 stellt eine Fluidverbindung zwischen der Filterkammer 18 und der Kraftstoffquelle bereit. Die Durchschnittsfachleute auf dem Gebiet werden erkennen, dass der Kraftstoff-Filter 10 nicht angrenzend an die Verbrennungskraftmaschine oder die Kraftstoffquelle oder unmittelbar an denselben angebracht sein muss. Folglich wird zu erkennen sein, dass es Leitungen und andere Bauteile geben kann, die zwischen dem Kraftstoff-Filter 10 und der Verbrennungskraftmaschine sowie dem Kraftstofftank angeordnet sind, ohne vom Rahmen der vorliegenden Erfindung abzuweichen. Außerdem kann die Kraftstoff-Filterbaugruppe 10 andere Bauteile und Strukturelemente haben, die für den effizienten Betrieb der Baugruppe ausgelegt sind und die im Stand der Technik weithin bekannt sind, die hier aber nicht ausführlich erörtert werden.

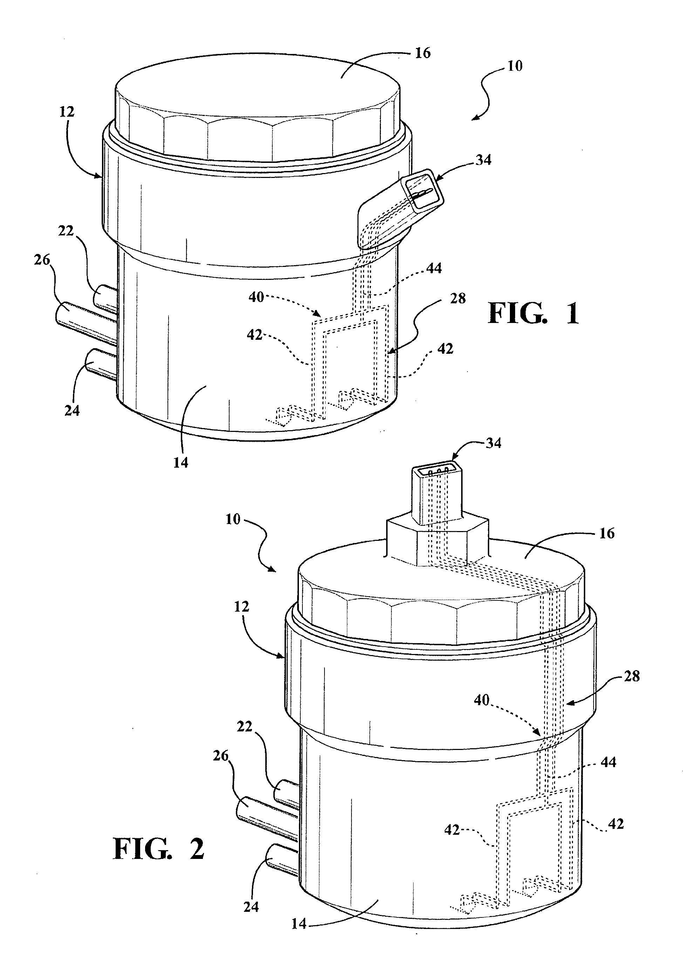

Außerdem schließt die Kraftstoff-Filterbaugruppe 10 wenigstens einen Sensor, im Allgemeinen bei 28 angezeigt, ein, der wirksam durch das Gehäuse getragen wird, um wenigstens eine Eigenschaft des Kraftstoffs, der durch die Filterbaugruppe 10 hindurchgeht, zu erfassen. Wie in Figur 1-2 illustriert, kann die Baugruppe 10 bei einer Ausführungsform ebenfalls mehrere in Phantomlinien illustrierte Sensoren 28 einschließen, die wirksam in dem Gehäuse 12 getragen werden, um mehrere Eigenschaften des Kraftstoffs, der durch die Filterbaugruppe 10 hindurchgeht, zu erfassen. Die Sensoren 28 können dafür eingesetzt werden, die Temperatur, den Druck, die Viskosität oder eine beliebige andere Eigenschaft des Kraftstoffs zu erfassen, wie es bei einer beliebigen gegebenen Kraftstoff-Zufuhranlage erwünscht oder notwendig sein mag. Ob die Kraftstoff-Filterbaugruppe 10 nun einen einzelnen Sensor oder mehrere Sensoren einschließt, jeder der Sensoren 28 schließt eine Element-Baugruppe 30 ein, die ein Element 32 einschließt, das dem Kraftstoff ausgesetzt ist. Die Baugruppe 10 schließt ebenfalls einen gemeinsamen Verbinderanschluss 34 ein, der dafür eingerichtet ist, eine elektrische Verbindung zwischen einer Energiequelle und jeder der Sensorelement-Baugruppen 30 herzustellen. Der Begriff "gemeinsamer Verbinderanschluss", wie er hierin verwendet wird, bezeichnet einen einzelnen Verbinderanschluss, der jeden der Sensoren 28 versorgt, ungeachtet dessen, wie viele Sensoren für die Kraftstoff-Filterbaugruppe 10 eingesetzt werden. Zu diesem Zweck kann der gemeinsame Verbinderanschluss 34, wie in Figur 1 illustriert, in dem Topf 14 geformt sein, oder er kann, wie in Figur 2 illustriert, in dem Deckel 16 geformt sein.

Die Element-Baugruppen 30 schließen ein Gehäuse 36 und Elementleitungen 38, die sich durch das Gehäuse 36 erstrecken, ein. Das Gehäuse 36 schließt eine Öffnung 37 an dem distalen Ende ein, die das Element 32 dem Kraftstoff aussetzt. Zusätzlich schließt jeder der Sensoren 28 Leitungen 40 ein, die sich zwischen den Element-Baugruppen 30 und dem gemeinsamen Verbinderanschluss 34 erstrecken. Wie am besten in Figur 3 gezeigt und anders als bei den Kraftstoff-Filtern des allgemein beim Stand der Technik bekannten Typs, wo die Leitungen einfach durch in dem Gehäuse geformte Öffnungen hindurchgehen, sind die Leitungen 40 der Sensoren 28 der vorliegenden Erfindung im Wesentlichen zwischen den Element-Baugruppen 30 und dem gemeinsamen Verbinder 34 in Kunststoff eingekapselt derart, dass die Leitungen 40 gegenüber einer Berührung mit dem Kraftstoff versiegelt sind. Bei der hierin illustrierten repräsentativen Ausführungsform wird die Element-Baugruppe 30 so angeordnet gezeigt, dass sie dem Kraftstoff ausgesetzt ist, der durch den Auslass 24 der Kraftstoff-Filterbaugruppe 10 hindurchgeht. Jedoch werden die Durchschnittsfachleute auf dem Gebiet erkennen, dass die Element-Baugruppen 30 an einem beliebigen Ort innerhalb der Kraftstoff-Filterbaugruppe 10 angeordnet sein können, der günstig für den Zweck des Erfassens einer Eigenschaft des Kraftstoffs ist. Wie am besten in Figur 1-2 gezeigt wird, ist jede der Sensorelement-Baugruppen 30 mit wenigstens einer Stromleitung 42 und wenigstens einer Erdleitung 44 verknüpft. Im Einzelnen schließt, wenn mehrere Sensoren-Baugruppen 30 in einem beliebigen gegebenen Gehäuse 12 eingesetzt werden, jede der Sensoren-Baugruppen 30 wenigstens eine mit einer Energiequelle verbundene Leitung 42 und eine gemeinsame Erde 44 ein. Die Stromleitungen 42 und die Erdleitungen 44 sind in einer Nebeneinanderbeziehung in Bezug aufeinander angeordnet und zwischen jeder der Sensorelement-Baugruppen 30 und dem gemeinsamen Verbinderanschluss 34 in Kunststoff eingekapselt. Diese besondere Anordnung wird, wie weiter unten ausführlicher beschrieben werden wird, durch das Verfahren der vorliegenden Erfindung erleichtert.

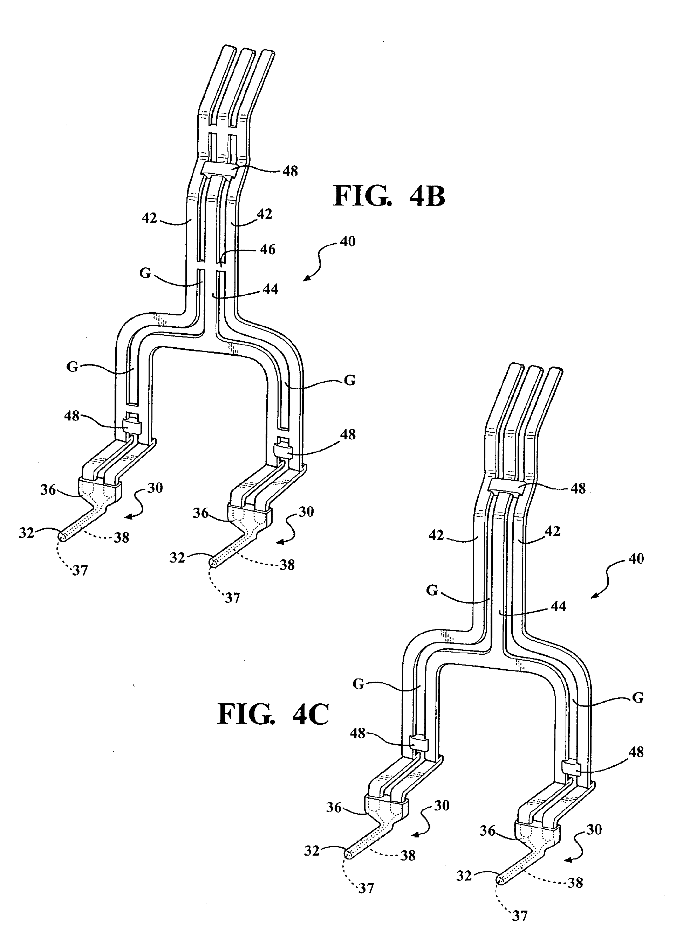

Im Einzelnen ist die vorliegende Erfindung ebenfalls auf ein Verfahren zur Fertigung eines Kraftstoff-Filters 10 für eine Verbrennungskraftmaschine gerichtet. Das Verfahren schließt den Schritt des Anordnens wenigstens eines Sensors 28, der eine Element-Baugruppe 30 und Leitungen 42, 44 einschließt, in einem Formhohlraum ein. Im Einzelnen wird der Sensor 28 typischerweise in einer Formhälfte angeordnet. Die Formhälfte wird, typischerweise durch eine andere Formhälfte, geschlossen, um so einen Formhohlraum zu definieren. In dem Fall, dass eine Kraftstoff-Filterbaugruppe 10 mehrere Sensoren einsetzt, wird jeder der Sensoren 28 in der Formhälfte angeordnet, und die Formhälfte wird geschlossen. Danach wird geschmolzener Kunststoff in den Formhohlraum eingespritzt, um so ein Filtergehäuse 12 zu definieren, das eine innere Filterkammer 18 hat, durch die Kraftstoff hindurchgehen kann, so dass jeder der mehreren Sensoren 28 dem Kraftstoff ausgesetzt ist, der durch die Filterkammer 18 hindurchgeht. Zusätzlich wird jede der mit den Sensoren 28 verknüpften Leitungen 42, 44 in geschmolzenem Kunststoff eingekapselt. Unter besonderer Bezugnahme auf Figur 4A-4B werden, vor dem Anordnen der Sensoren 28 in einer beliebigen gegebenen Formhälfte, die Leitungen 40 geformt und an dem Sensorelement 30 befestigt. Das Formen der Leitungen 40 schließt das Stanzen von Leitungen aus einem Metallrohling ein, wobei die Leitungen 40 geformt werden durch das Stanzen des Metallrohlings derart, dass die Leitungen 40 zueinander benachbart so angeordnet sind, dass ein Spalt G zwischen denselben definiert wird. Außerdem sind benachbarte Leitungen 42, 44 durch Metallglieder 46 verbunden, die aus dem Metallrohling geformt sind. Danach werden benachbarte Leitungen 42, 44 durch das Anlegen von Kunststoff-Bindungen 48 verbunden, die den Spalt G zwischen benachbarten Leitungen 42, 44 überbrücken, so dass benachbarte Leitungen 42, 44 miteinander verbunden sind, um so eine integrierte Leitungsbaugruppe zu bilden, die allgemein bei 40 angezeigt wird. Darüber hinaus werden benachbarte Leitungen 42, 44 elektrisch voneinander isoliert. Zu diesem Zweck, und wie am besten in Figur 4C gezeigt, schließt das Verfahren ferner den Schritt des Beschneidens der Metallglieder 46, die benachbarte Leitungen 42, 44 verbinden, ein, so dass benachbarte Leitungen 42, 44 elektrisch voneinander isoliert werden. Sobald die Element-Baugruppen 30 an den Enden der Leitungen 40 befestigt worden sind, können die Leitungen, wie oben beschrieben, in dem Formhohlraum angeordnet werden. Zusätzlich zu dem Schritt des Stanzens der Leitungen 40 aus einem Metallrohling können die Leitungen 40 ebenfalls ferner so geformt werden, dass sie dafür gestaltet sind, sich einem bestimmten Umriss anzupassen, der notwendig ist, um die Elemente des gemeinsamen Verbinderanschlusses miteinander zu verbinden. Folglich können, wie in Figur 4A-4C illustriert, die Leitungen gebogen werden, um zwischen den Element-Baugruppen 30 und dem gemeinsamen Verbinderanschluss 34 dem Umriss des Topf 14 und dem Deckel 16 des Gehäuses 12 zu folgen. Auf diese Weise und durch den Einsatz des Verfahrens zur Fertigung eines Kraftstoff-Filters 10 für eine Verbrennungskraftmaschine der vorliegenden Erfindung werden die zusätzlichen Kosten, die mit den mit Gewinde versehenen Messingeinsätzen, O-Ringen und anderen Befestigungsbauteilen verknüpft sind, ebenso beseitigt wie die Kosten des Montierens der Sensorbaugruppe an dem Gehäuse.

Die vorliegende Erfindung ist auf eine illustrierende Weise beschrieben worden. Es sollte sich verstehen, dass beabsichtigt ist, dass die Terminologie, die verwendet worden ist, die Beschaffenheit von Worten der Beschreibung anstatt der Begrenzung hat. Im Licht der obigen Lehren sind viele Modifikationen und Variationen der vorliegenden Erfindung möglich. Daher kann, im Rahmen der angefügten Ansprüche, die vorliegende Erfindung anders als spezifisch beschrieben umgesetzt werden.

## Patentansprüche

1. Kraftstoff-Filterbaugruppe (10) für eine Verbrennungskraftmaschine, wobei die Baugruppe Folgendes umfasst:
ein geformtes Kunststoffgehäuse (12), das eine innere Filterkammer (18) definiert, ein Filterelement (20), das wirksam in der Filterkammer (18) getragen wird und durch das Kraftstoff geführt wird,
wenigstens einen Sensor (28) mit einem Element (32), der wirksam durch das Gehäuse (12) getragen wird, einen gemeinsamen Verbinderanschluss (34), der dafür eingerichtet ist, eine elektrische Verbindung mit einer Energiequelle bereitzustellen,
Leitungen (42,44), die sich zwischen dem Element (32) und dem gemeinsamen Verbinderanschluss (34) erstrecken, wobei die Leitungen (42,44) im Wesentlichen zwischen dem Element (32) und dem gemeinsamen Verbinderanschluss (34) in Kunststoff eingekapselt sind derart, dass die Leitungen (42,44) gegenüber einer Berührung mit dem Kraftstoff versiegelt sind,
**dadurch gekennzeichnet,**
**dass** der wenigstens eine Sensor (28) wenigstens eine Eigenschaft des Kraftstoffs, der durch den Kraftstoff-Filter (20) hindurchgeht, erfasst und wobei das Element (32) des Sensors (28) dem Kraftstoff ausgesetzt ist.

2. Kraftstoff-Filterbaugruppe nach Anspruch 1, wobei das Gehäuse (12) einen Topf (14) und einen Deckel (16) einschließt, wobei der Deckel (16) abnehmbar an dem Topf (14) angebracht ist.

3. Kraftstoff-Filterbaugruppe nach Anspruch 2, wobei der gemeinsame Verbinderanschluss (34) in dem Topf (14) geformt ist.

4. Kraftstoff-Filterbaugruppe nach Anspruch 2, wobei der gemeinsame Verbinderanschluss (34) in dem Deckel (16) geformt ist.

5. Kraftstoff-Filterbaugruppe nach Anspruch 1, wobei die Baugruppe mehrere Sensoren (28), die wirksam in dem Gehäuse (12) getragen werden, um mehrere Eigenschaften des Kraftstoffs, der durch die Filterbaugruppe (10) hindurchgeht, zu erfassen, wobei jeder der Sensoren (28) ein Element (32) einschließt, das dem Kraftstoff ausgesetzt ist, einen gemeinsamen Verbinderanschluss (34), der dafür eingerichtet ist, eine elektrische Verbindung zwischen der Energiequelle und jedem der Sensorelemente (32) herzustellen, und Leitungen (42,44), die sich zwischen dem Element (32) und dem gemeinsamen Verbinderanschluss (34) erstrecken, wobei die Leitungen (42,44) im Wesentlichen zwischen dem Element (32) und dem gemeinsamen Verbinderanschluss (34) in Kunststoff eingekapselt sind derart, dass die Leitungen (42,44) gegenüber einer Berührung mit dem Kraftstoff versiegelt sind, einschließt.

6. Kraftstoff-Filterbaugruppe nach Anspruch 1, wobei das Gehäuse (12) einen Einlass (22), der eine Fluidverbindung zwischen einer Kraftstoffquelle und der Filterkammer (18) bereitstellt, einen Auslass (24), der eine Fluidverbindung zwischen der Filterkammer (18) und der Verbrennungskraftmaschine bereitstellt, und eine Rückführungsöffnung (26), die eine Fluidverbindung zwischen der Filterkammer (18) und der Kraftstoffquelle bereitstellt, einschließt.

7. Kraftstoff-Filterbaugruppe nach Anspruch 1, wobei jedes der Elemente (32) mit wenigstens einer Stromleitung (42) und einer Erdleitung (44) verknüpft ist.

8. Kraftstoff-Filterbaugruppe nach Anspruch 5, wobei jeder der Sensoren (28) in den mehreren Sensoren (28) eine mit einer Energiequelle verbundene Leitung (42) und eine gemeinsame Erde (44) einschließt.

9. Kraftstoff-Filterbaugruppe nach Anspruch 8, wobei die Stromleitung (42) und die Erdleitungen (44) in einer Nebeneinanderbeziehung in Bezug aufeinander angeordnet und zwischen jedem der Elemente (32) und dem gemeinsamen Verbinderanschluss (34) in Kunststoff eingekapselt sind.

10. Kraftstoff-Filterbaugruppenach Anspruch 1, wobei die Baugruppe Folgendes umfasst:
mehrere Sensoren (28), die wirksam in dem Gehäuse (12) getragen werden, um mehrere Eigenschaften des Kraftstoffs, der durch die Filterbaugruppe (10) hindurchgeht, zu erfassen, wobei jeder der Sensoren (28) ein solches Element (32) einschließt, das dem Kraftstoff ausgesetzt ist, einen solchen gemeinsamen Verbinderanschluss (34), der dafür eingerichtet ist, eine elektrische Verbindung zwischen einer Energiequelle und jedem der Sensorelemente (32) herzustellen, und Leitungen (42,44), die sich zwischen jedem der Elemente (32) und dem gemeinsamen Verbinderanschluss (34) erstrecken, wobei die Leitungen (42,44) im Wesentlichen zwischen jedem der Elemente (32) und dem gemeinsamen Verbinderanschluss (34) in Kunststoff eingekapselt sind derart, dass die Leitungen (42,44) gegenüber einer Berührung mit dem Kraftstoff versiegelt sind, wobei das Gehäuse (12) den Einlass (22), der eine Fluidverbindung zwischen einer Kraftstoffquelle und der Filterkammer (18) bereitstellt, den Auslass (24), der eine Fluidverbindung zwischen der Filterkammer (18) und der Verbrennungskraftmaschine bereitstellt, und die Rückführungsöffnung (26), die eine Fluidverbindung zwischen der Filterkammer (18) und der Kraftstoffquelle bereitstellt, einschließt.

11. Verfahren zur Fertigung eines Kraftstoff-Filters für eine Verbrennungskraftmaschine, wobei das Verfahren die folgenden Schritte umfasst:
das Anordnen wenigstens eines Sensors (28), der ein Element (32) und Leitungen (42,44) einschließt, in einem Formhohlraum;
das Einspritzen von geschmolzenem Kunststoff in den Formhohlraum, um so ein Filtergehäuse (12) zu definieren, das eine innere Filterkammer (18) hat, durch die Kraftstoff hindurchgehen kann, und so, dass das Element (32) dem Kraftstoff ausgesetzt ist, der durch die Filterkammer (18) hindurchgeht, und die Leitungen (42,44) in geschmolzenem Kunststoff eingekapselt werden.

12. Verfahren nach Anspruch 11, das ferner den folgenden Schritt einschließt:
das Anordnen des Sensors (28) in einer Formhälfte, das Schließen der Formhälfte, um einen Formhohlraum zu definieren, das Einspritzen von geschmolzenem Kunststoff in den Formhohlraum, um das Gehäuse (12) zu definieren.

13. Verfahren nach Anspruch 11, wobei das Verfahren ferner die Schritte des Formens von Leitungen (42,44) und des Befestigens der Leitungen (42,44) an dem Sensorelement (32) einschließt.

14. Verfahren nach Anspruch 11, wobei der Schritt des Formens der Leitungen (42,44) das Stanzen der Leitungen (42,44) aus einem Metallrohling einschließt, wobei die durch den Schritt des Stanzens geformten Leitungen (42,44) zueinander benachbart so angeordnet werden, dass ein Spalt zwischen denselben definiert wird, und durch Metallglieder verbunden, die aus dem Metallrohling geformt sind.

15. Verfahren nach Anspruch 11, wobei das Verfahren ferner die Schritte des Verbindens von benachbarten Leitungen (42,44) durch das Anlegen von Kunststoff-Bindungen einschließt, die den Spalt zwischen benachbarten Leitungen (42,44) überbrücken, so dass benachbarte Leitungen (42,44) miteinander verbunden sind, um so eine integrierte Leitungsbaugruppe (40) zu bilden, wobei benachbarte Leitungen (42,44) elektrisch voneinander isoliert werden.

16. Verfahren nach Anspruch 11, wobei das Verfahren ferner den Schritt des Beschneidens der Metallglieder, die benachbarte Leitungen (42,44) verbinden, einschließt, so dass benachbarte Leitungen (42,44) elektrisch voneinander isoliert werden.

17. Verfahren nach Anspruch 11, das ferner den Schritt des Anordnens der mehreren Sensoren (28), deren jeder ein Element (32) und Leitungen (42,44) einschließt, in einem Formhohlraum, einschließt;
des Einspritzens von geschmolzenem Kunststoff in den Formhohlraum, um so ein Filtergehäuse (12) zu definieren, das eine innere Filterkammer (18) hat, durch die Kraftstoff hindurchgehen kann, und so, dass jedes der Elemente (32) jedes der mehreren Sensoren (28) dem Kraftstoff ausgesetzt ist, der durch die Filterkammer (18) hindurchgeht, und jede der mit jedem der Sensoren (28) verknüpften Leitungen (42,44) in geschmolzenem Kunststoff eingekapselt wird.

## Claims

1. A fuel filter assembly (10) for an internal combustion engine, said assembly comprising:
a molded plastic housing (12) defining an interior filter chamber (18), a filter element (20) operatively supported in said filter chamber (18) and through which fuel is passed;
at least one sensor (28) operatively supported by said housing (12), said sensor (28) including an element (32), a common connector terminal (34) adapted for electrical communication with a source of power and leads (42,44) extending between said element (32) and said common connector terminal (34), said leads (42,44) being encased in plastic substantially between said element (32) and said common connector terminal (34) such that said leads (42,44) are sealed from contact with the fuel,
**characterized in that**
the at least one sensor (28) sensing at least one condition of the fuel passing through said filter assembly (10) and said element (32) is exposed to the fuel.

2. The fuel filter assembly as set forth in claim 1 wherein said housing (12) includes a body (14) and a cap (16), said cap (16) removably mounted to said body (14).

3. The fuel filter assembly as set forth in claim 2 wherein said common connector terminal (34) is formed in said body (14).

4. The fuel filter assembly as set forth in claim 2 wherein said common connector terminal (34) is formed in said cap (14).

5. The fuel filter assembly as set forth in claim 1 wherein said assembly includes a plurality of sensors (28) operatively supported in said housing (12) for sensing a plurality of conditions of the fuel passing through said filter assembly (10), each of said plurality of sensors (28) including an element (32) that is exposed to the fuel, a common connector terminal (34) that is adapted to establish electrical communication between the source of power and each of said sensor elements (32), and leads (42,44) extending between said element (32) and said common connector terminal (34), said leads (42,44) encased in plastic substantially between said element (32) and said common terminal connector (34) such that said leads (42,44) are sealed from contact with the fuel.

6. The fuel filter assembly as set forth in claim 1 wherein said housing (12) includes an inlet (22) providing fluid communication between a source of fuel and said filter chamber (18), an outlet (24) providing fluid communication between said filter chamber (18) and the internal combustion engine, and a return port (26) providing fluid communication between said filter chamber (18) and the source of fuel.

7. The fuel filter assembly as set forth in claim 1 wherein each of said elements (32) is associated with at least one power lead (42) and one ground lead (44).

8. The fuel filter assembly as set forth in claim 5 wherein each of said sensors (28) in said plurality of sensors (28) includes one lead (42,44) connected to a source of power and a common ground.

9. The fuel filter assembly as set forth in claim 8 wherein said power lead (42) and said ground leads (44) are disposed in side-by-side relationship with respect to one another and encased in plastic between each of said elements (32) and said common connector terminal (34).

10. A fuel filter assembly for an internal combustion engine, said assembly comprising:
a plurality of sensors (28) operatively supported in said housing (12) for sensing a plurality of conditions of the fuel passing through said filter assembly (10), each of said plurality of sensors (28) including an element (32) that is exposed to the fuel, a common connector terminal (34) that is adapted to establish electrical communication between a source of power and each of said sensor elements (32), and leads (42,44) extending between each of the said elements (32) and said common connector terminals (34), said leads (42,44) encased in plastic substantially between each of said elements (32) and said common terminal connector (34) such that said leads are sealed from contact with the fuel,
said housing (12) further including the inlet (22) providing fluid communication between a source of fuel and said filter chamber (18), the outlet (24) providing fluid communication between said filter chamber (18) and the internal combustion engine, and the return port (26) providing fluid communication between said filter chamber (18) and the source of fuel.

11. The method of manufacturing a fuel filter for an internal combustion engine, said method comprising the steps of:
placing at least one sensor (28) including an element (32) and leads (42,44) in a mold cavity;
injecting molten plastic into said mold cavity so as to define a filter housing (12) having an interior filter chamber (18) through which fuel may pass and so that said element (32) is exposed to fuel passing through the filter chamber (18) and said leads (42,44) are encased in molten plastic.

12. The method as set forth in claim 11 further including the step of:
placing the sensor (28) in a mold half, closing the mold half to define a mold cavity, injecting molten plastic into the mold cavity to define the housing (12).

13. The method as set forth in claim 11 wherein the method further includes the steps of forming leads and attaching the leads (42,44) to the sensor element (32).

14. The method as set forth in claim 11 wherein said step of forming the leads (42,44) includes stamping the leads (42,44) from a metal blank wherein the leads (42,44) formed by the step of stamping are disposed adjacent to one another so as to define a gap therebetween and connected by metal links formed from the metal blank.

15. The method as set forth in claim 11 wherein the method further includes the steps of connecting adjacent leads (42,44) by applying plastic bindings that bridge the gap between adjacent leads (42,44) so that adjacent leads (42,44) are connected to one another so as to define an integrated lead assembly (40) wherein adjacent leads (42,44) are electrically isolated from one another.

16. The method as set forth in claim 11 wherein the method further includes the step of trimming the metal links connecting adjacent leads (42,44) so that adjacent leads (42,44) are electrically isolated from one another.

17. The method as set forth in claim 11 further including the step of placing the plurality of sensors (28), each of which includes an element (32) and leads (42,44), in a mold cavity;
injecting molten plastic into the mold cavity so as to define a filter housing (12) having an interior filter chamber (18) through which fuel may pass and so that each of the elements (32) of each of the plurality of sensors (28) is exposed to fuel passing through the filter chamber (18) and each of the leads (42,44) associated with each of the sensors (28) is encased in molded plastic.

## Revendications

1. Module de filtre à carburant (10) pour un moteur à combustion interne, dans lequel le module comprend ce qui suit :
un logement en plastique façonné (12), qui définit une chambre de filtre intérieure (18), un élément de filtre (20), qui est supporté de manière efficace dans la chambre de filtre (18) et à travers lequel le carburant est guidé,
au moins un capteur (28) comportant un élément (32), qui est supporté de manière efficace à travers le logement (12), un raccord de liaison (34) commun, qui est conçu de manière à fournir une connexion électrique avec une source d'énergie électrique,
des lignes (42, 44), qui s'étendent entre l'élément (32) et le raccord de liaison commun (34), dans lequel les lignes (42, 44) sont encapsulées essentiellement entre l'élément (32) et le raccord de liaison commun (34) en plastique de telle sorte que les lignes (42, 44) soit scellées par rapport à un contact avec le carburant,
**caractérisé en ce que**
au moins un capteur (28) détecte au moins une propriété du carburant, qui passe à travers le filtre à carburant (20), et dans lequel l'élément (32) du capteur (28) à est exposé au carburant.

2. Module de filtre à carburant selon la revendication 1, dans lequel le logement (12) englobe un pot (14) et un couvercle (16), dans lequel le couvercle (16) est monté de manière amovible sur le pot (14).

3. Module de filtre à carburant selon la revendication 2, dans lequel le raccord de liaison commun (34) est façonné dans le pot (14).

4. Module de filtre à carburant selon la revendication 2, dans lequel le raccord de liaison commun (34) est façonné dans le couvercle (16).

5. Module de filtre à carburant selon la revendication 1, dans lequel le module englobe plusieurs capteurs (28), qui sont supportés de manière efficace dans le logement (12), afin de détecter plusieurs propriétés du carburant, qui passe à travers le module de filtre (10), dans lequel chacun des capteurs (28) englobe un élément (32), qui est exposé au carburant, un raccord de liaison commun (34), qui est conçu de manière à établir une liaison électrique entre la source d'énergie électrique et chacun des éléments de capteur (32), et des lignes (42, 44), qui s' (étendent entre l'élément (32) et le raccord de liaison commun (34), dans lequel les lignes (42, 44) sont encapsulées essentiellement entre l'élément (32) et le raccord de liaison commun (34) e plastique, de telle sorte que les lignes (42, 44) soient scellées par rapport à un contact avec le carburant.

6. Module de filtre à carburant selon la revendication 1, dans lequel le logement (12) englobe une admission (22), qui fournit une liaison de fluide entre une source de carburant et la chambre de filtre (18), une évacuation (24), qui fournit une liaison de fluide entre la chambre de filtre (18) et le moteur à combustion interne, et une ouverture de réintroduction (26), qui fournit une liaison de fluide entre la chambre de filtre (18) et la source de carburant.

7. Module de filtre à carburant selon la revendication 1, dans lequel chacun des éléments (32) est relié à au moins une ligne électrique (42) et une ligne de masse (44).

8. Module de filtre à carburant selon la revendication 5, dans lequel chacun des capteurs (28) parmi la pluralité de capteurs (28) englobe une ligne (42) reliée à une source d'énergie électrique et une masse commune (44).

9. Module de filtre à carburant selon la revendication 8, dans lequel la ligne électrique (42) et les lignes de masse (44) sont disposées les unes sur les autres dans une relation côté à côté et encapsulées entre chacun des éléments (32) et le raccord de liaison commun (34) en plastique.

10. Module de filtre à carburant selon la revendication 1, dans lequel le module comprend ce qui suit :
plusieurs capteurs (28), qui sont supportés de manière efficace dans le logement (12), afin de détecter plusieurs propriétés du carburant, qui passe à travers le module de filtre (10), dans lequel chacun des capteurs (28) englobe un élément (32), qui est exposé au carburant, un tel raccord de liaison commun (34), qui est conçu de manière à établir une liaison électrique entre la source d'énergie électrique et chacun des éléments de capteur (32), et des lignes (42, 44), qui s'étendent entre l'élément (32) et le raccord de liaison commun (34), dans lequel les lignes (42, 44) sont encapsulées essentiellement entre l'élément (32) et le raccord de liaison commun (34) e plastique, de telle sorte que les lignes (42, 44) soient scellées par rapport à un contact avec le carburant, dans lequel le logement (12) englobe une admission (22), qui fournit une liaison de fluide entre une source de carburant et la chambre de filtre (18), l'admission (24), qui fournit une liaison de fluide entre la chambre de filtre (18) et le moteur à combustion interne, et l'ouverture de réintroduction (26), qui établit une liaison de fluide entre la chambre de filtre (18) et la source de carburant.

11. Procédé de fabrication d'un filtre à carburant pour un moteur à combustion interne, dans lequel le procédé comprend les étapes suivantes :
la disposition d'au moins un capteur (28), qui englobe un élément (32) et des lignes (42, 44), dans un espace de moule creux ;
l'injection de plastique fondu dans l'espace de moule creux, afin de définir un logement de filtre (12), qui possède un espace de filtre intérieur (18), à travers lequel le carburant peut passer, et de telle sorte que l'élément (32) soit exposé au carburant, qui passe à travers la chambre de filtre (18), et les lignes (42, 44) sont encapsulées dans du plastique fondu.

12. Procédé selon la revendication 11, qui inclut en outre l'étape suivante :
le dispositif du capteur (28) dans une moitié de moule, la fermeture des moitiés de moule, afin de définir un espace de moule creux, l'injection de plastique fondu dans l'espace de moule creux, afin de défini le logement (12).

13. Procédé selon la revendication 11, dans lequel le procédé inclut en outre les étapes de façonnage des lignes (42, 44) et de fixation des lignes (42, 44) sur l'élément de capteur (32).

14. Procédé selon la revendication 11, dans lequel l'étape de façonnage des lignes (42, 44) inclut le découpage à l'emporte pièces des lignes (42, 44) à partir d'une ébauche en métal, dans lequel les lignes (42, 44) façonnées par l'étape de découpage à l'emporte pièces sont disposées en voisinage les unes des autres, de telle sorte qu'un interstice entre celles-ci soit défini, et reliées par des organes métalliques, qui sont façonnés à partir de l'ébauche en métal.

15. Procédé selon la revendication 11, dans lequel le procédé inclut en outre les étapes de liaison des lignes voisines (42, 44) par la pose d'attaches en plastique, qui chevauchent l'interstice entre des lignes voisines (42, 44), de telle sorte que des lignes voisines (42, 44) soient reliées les unes aux autres, pour former ainsi un module de puissance intégré (40), dans lequel des lignes voisines (42, 44) sont isolées électriquement les unes des autres.

16. Procédé selon la revendication 11, dans lequel le procédé inclut en outre l'étape de découpage des organes métalliques, qui relient des lignes voisines (42, 44), de telle sorte que des lignes voisines (42, 44) soient isolées électriquement les unes des autres.

17. Procédé selon la revendication 11, qui inclut en outre l'étape de disposition de plusieurs capteurs (28), dont chacun inclut un élément (32) et des lignes (42, 44), dans un espace de moule creux ;
l'injection de plastique fondu dans l'espace de moule creux, afin de définir ainsi un logement de filtre (12), qui possède une chambre de filtre intérieure (18), à travers laquelle le carburant peut passer et de telle sorte que chacun des éléments (32) de chacun de la pluralité de capteurs (28) soit exposé au carburant, qui passe à travers la chambre de filtre (18), et chacune des lignes (42, 44) reliées à chacun des capteurs (28) est encapsulé dans du plastique fondu.
